(19) **Europäisches Patentamt / European Patent Office / Office européen des brevets**

(11) **EP 3 601 469 B1**

(12) **FASCICULE DE BREVET EUROPEEN**

(45) Date de publication et mention
de la délivrance du brevet:
**12.01.2022 Bulletin 2022/02**

(21) Numéro de dépôt: **18715212.9**

(22) Date de dépôt: **20.03.2018**

(51) Int Cl.:
**C09K 5/04** (2006.01)    **B60H 1/00** (2006.01)

(86) Numéro de dépôt international:
**PCT/FR2018/050671**

(87) Numéro de publication internationale:
**WO 2018/172689 (27.09.2018 Gazette 2018/39)**

(54) **PROCEDE DE CHAUFFAGE ET/OU CLIMATISATION D'UN VEHICULE**

VERFAHREN ZUR BEHEIZUNG UND/ODER KLIMATISIERUNG EINES FAHRZEUGES

METHOD FOR HEATING AND/OR AIR-CONDITIONING IN A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.03.2017 FR 1752304**

(43) Date de publication de la demande:
**05.02.2020 Bulletin 2020/06**

(73) Titulaire: **Arkema France
92700 Colombes (FR)**

(72) Inventeur: **RACHED, Wissam
69630 Chaponost (FR)**

(74) Mandataire: **Arkema Patent
Arkema France
DRD-DPI
420, rue d'Estienne d'Orves
92705 Colombes Cedex (FR)**

(56) Documents cités:
**WO-A1-2010/058126    FR-A1- 2 959 998
US-A1- 2013 096 218**

EP 3 601 469 B1

**Description**

La présente invention concerne un procédé de chauffage et/ou de climatisation d'un habitacle de véhicule automobile.

Dans les véhicules automobiles, le moteur thermique comporte un circuit de circulation d'un fluide caloporteur qui est utilisé pour le refroidissement du moteur et également pour le chauffage de l'habitacle. A cet effet, le circuit comprend notamment une pompe et un aérotherme dans lequel circule un flux d'air qui récupère la chaleur emmagasinée par le fluide caloporteur afin de chauffer l'habitacle.

Par ailleurs, un système de climatisation destiné à refroidir l'habitacle d'un véhicule automobile comprend un évaporateur, un compresseur, un condenseur, un détendeur et un fluide susceptible de changer d'états (liquide/gaz) communément désigné fluide frigorigène. Le compresseur, directement entraîné par le moteur du véhicule à l'aide d'une courroie et d'une poulie, comprime le fluide frigorigène, le refoulant sous haute pression et à haute température vers le condenseur. Le condenseur, grâce à une ventilation forcée, provoque la condensation du gaz qui arrive à l'état gazeux à haute pression et haute température. Le condenseur liquéfie le gaz grâce à l'abaissement de température de l'air qui le traverse. L'évaporateur, est un échangeur thermique qui prélève des calories à l'air qui sera soufflé dans l'habitacle. Le détendeur permet de réguler le débit d'entrée du gaz dans la boucle via une modification de section de passage dépendant de la température et de la pression au niveau de l'évaporateur. Ainsi, l'air chaud venant de l'extérieur se refroidit en traversant l'évaporateur.

Le fluide frigorigène largement utilisé dans la climatisation automobile est le 1,1,1,2-tétrafluoroéthane (HFC-134a).

Le document WO 2008/107623 décrit un système de gestion d'énergie d'un véhicule automobile comprenant une boucle frigorifique réversible avec circulation d'un fluide frigorigène, des moyens d'inversion du cycle de fonctionnement de la boucle frigorifique mobiles entre une position en mode frigorifique et une position en mode pompe à chaleur, au moins une première source apte à récupérer l'énergie du fluide frigorigène, et au moins une seconde source apte à évaporer le fluide frigorigène suite à la détente dudit fluide de l'état liquide à l'état diphasique, les moyens d'inversion étant aptes à permettre un écoulement du fluide frigorigène de la première source de récupération en direction d'au moins une source d'évaporation, lorsqu'ils sont dans une position identique à celle correspondant au mode pompe à chaleur.

Toutefois, avec le HFC-134a comme fluide frigorigène dans le système tel que décrit le document WO 2008/107623, lorsque la température extérieure est basse, par exemple autour de -10°C, une dépression commence à se former à l'évaporateur même avant que le compresseur ne soit lancé. Cette dépression qui conduit à une infiltration de l'air dans le système favorise les phénomènes de corrosion et la dégradation des composants tels que compresseur, échangeur et détendeur.

Le document WO 2010/058126 décrit l'utilisation d'une composition de 5-45% de difluorométhane, de 5-80% de 1,1,1,2-tétrafluoropropène et de 2-50% en poids d'au moins un composé choisi parmi le propane, le propène et l'éthylène, dans une boucle réversible de climatisation et/ou chauffage d'un habitacle de véhicule automobile.

Par ailleurs, les documents US 2013/096218 et FR 2959998 divulguent respectivement une composition de 85 % de 1,1,1,2-tétrafluoropropène, 5% de difluorométhane, 5% de tétrafluoroéthane et de 5% de pentafluoroéthane et, une composition comprenant de 5-50% de difluorométhane, de 2-20% de pentafluoroéthane et de 30-90% de tétra-fluoropropène.

La présente invention a pour objectif de limiter voire d'empêcher l'air de pénétrer dans l'évaporateur de la boucle frigorifique au démarrage du compresseur et/ou d'améliorer le rendement de la boucle frigorifique.

La présente invention a donc pour objet un procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du fonctionnement de la boucle frigorifique réversible, caractérisé en ce que le fluide frigorigène comprend (de préférence est constitué):

- de 4% à 6% en poids de difluorométhane (HFC-32);
- de 2,5% à 3,5% en poids de pentafluoroéthane (HFC-125) ; et
- de 91% à 93,5% en poids de tétrafluoropropène.

En particulier, le procédé de chauffage et/ou de climatisation d'un habitacle de véhicule automobile susmentionné comprend une étape de circulation dudit fluide frigorigène tel que défini précédemment, à savoir comprenant

- de 4% à 6% en poids de difluorométhane (HFC-32);
- de 2,5% à 3,5% en poids de pentafluoroéthane (HFC-125) ; et
- de 91% à 93,5% en poids de tétrafluoropropène.

De préférence, le procédé de chauffage et/ou climatisation comprend au moins l'une des étapes suivantes : une étape d'évaporation du fluide frigorigène, une étape de compression dudit fluide frigorigène, une étape de condensation dudit fluide frigorigène, une étape de détente dudit fluide frigorigène.

Selon l'invention, les pourcentages en poids sont par rapport au poids total dudit fluide frigorigène.

Sauf mention contraire, dans l'ensemble de la demande, les proportions de composés indiquées sont données en pourcentages massiques.

Dans le cadre de l'invention, le «HFO-1234yf» se réfère au 2,3,3,3-tétrafluoropropène.

Dans le cadre de l'invention, le «HFO-1234ze» se réfère au 1,3,3,3-tétrafluoropropène, et inclut l'isomère cis, l'isomère trans et leurs mélanges.

Selon un autre mode de réalisation, le fluide frigorigène consiste essentiellement, de préférence consiste en:

- de 4% à 6% en poids de difluorométhane (HFC-32);
- de 2,5% à 3,5% en poids de pentafluoroéthane (HFC-125) ; et
- de 91% à 93,5% en poids de tétrafluoropropène.

Des impuretés peuvent être présentes dans de tels fluides frigorigènes, à raison par exemple de moins de 1%, de préférence de moins de 0,5%, de préférence de moins de 0,1%, préférentiellement de moins de 0,05%, et en particulier de moins de 0,01%. Ces impuretés n'ont pas d'impact significatif sur les propriétés desdits fluides.

Selon un mode de réalisation, le fluide frigorigène comprend (de préférence est constitué de):

- de 4,5% à 5,5% en poids de difluorométhane ;
- de 2,5% à 3,5% en poids de pentafluoroéthane ; et
- de 91% à 93% en poids de tétrafluoropropène.

Selon un mode de réalisation, le fluide frigorigène comprend (de préférence est constitué de):

- de 4,5% à 5,5% en poids de difluorométhane ;
- de 2,5% à 3,5% en poids de pentafluoroéthane ; et
- de 91,5% à 93% en poids de tétrafluoropropène.

Selon un mode de réalisation, le fluide frigorigène comprend (de préférence est constitué de):

- de 4,5% à 5,5% en poids de difluorométhane ;
- de 2,5% à 3,5% en poids de pentafluoroéthane ; et
- de 91% à 92% en poids de tétrafluoropropène.

Selon un mode de réalisation, le fluide frigorigène comprend (de préférence est constitué de):

- de 4,5% à 5,5% en poids de difluorométhane ;
- de 3% à 3,5% en poids de pentafluoroéthane ; et
- de 91% à 92% en poids de tétrafluoropropène.

Selon un mode de réalisation, le tétrafluoropropène du fluide frigorigène est choisi parmi le 1,3,3,3-tétrafluoropropène et le 2,3,3,3-tétrafluoropropène, de préférence le tétrafluoropropène est le 2,3,3,3-tétrafluoropropène.

Selon un mode de réalisation, le fluide frigorigène susmentionné est choisi dans le groupe constitué des fluides suivants :

- 5% en poids de difluorométhane, 3,3% en poids de pentafluoroéthane, et 91,7% en poids de tétrafluoropropène, en particulier de 2,3,3,3-tétrafluoropropène ;
- 5% en poids de difluorométhane, 3% en poids de pentafluoroéthane, et 92% en poids de tétrafluoropropène, en particulier de 2,3,3,3-tétrafluoropropène ;
- 5% en poids de difluorométhane, 3,1% en poids de pentafluoroéthane, et 91,9% en poids de tétrafluoropropène, en particulier de 2,3,3,3-tétrafluoropropène ;
- 5% en poids de difluorométhane, 3,2% en poids de pentafluoroéthane, et 91,8% en poids de tétrafluoropropène, en particulier de 2,3,3,3-tétrafluoropropène ;
- 6% en poids de difluorométhane, 3% en poids de pentafluoroéthane, et 91% en poids de tétrafluoropropène, en particulier de 2,3,3,3-tétrafluoropropène ;
- 6% en poids de difluorométhane, 3,1% en poids de pentafluoroéthane, et 90,9% en poids de tétrafluoropropène, en particulier de 2,3,3,3-tétrafluoropropène ; et

- 6% en poids de difluorométhane, 2,5% en poids de pentafluoroéthane, et 91,5 % en poids de tétrafluoropropène, en particulier de 2,3,3,3-tétrafluoropropène.

Selon un mode de réalisation, le fluide frigorigène a un GWP inférieur à 150, de préférence inférieur ou égal à 140, en particulier inférieur ou égal à 130. Le GWP peut être calculé selon les indications fournies par le 4<sup>ème</sup> rapport du Groupe d'experts intergouvernemental sur l'évolution du climat (GIEC). Le GWP des mélanges est en particulier calculé en fonction de la concentration massique et le GWP de chaque composant. Les GWP des composés purs sont typiquement listés dans la Directive Européenne F-Gas (Réglement (EU) No 517/2014 du parlement européen et du conseil, du 16 Avril 2014).

Les fluides frigorigènes susmentionnés sont avantageusement peu ou non inflammables.

Les fluides frigorigènes susmentionnés ont avantageusement une limite inférieure d'inflammabilité supérieure à 285 g/m$^3$, de préférence supérieure ou égale à 287 g/m$^3$, en particulier supérieure ou égale à 290 g/m$^3$.

Le fluide frigorigène susmentionné conduit avantageusement à une composition WCFF ayant une limite inférieure d'inflammabilité supérieure à 100 g/m$^3$, de préférence supérieure ou égale à 105 g/ m$^3$, en particulier supérieure ou égale à 110 g/m$^3$.

Les fluides frigorigènes susmentionnés, les WCF et WCFF correspondantes, ont une chaleur de combustion (HOC) inférieure à 19 000 kJ/m$^3$. La chaleur de combustion selon l'invention est définie et déterminée tel qu'indiqué dans la norme ASHRAE 34-2013.

La « limite inférieure d'inflammabilité » est définie dans la norme ASHRAE 34-2013 comme étant la concentration minimale d'une composition capable de propager une flamme à travers un mélange homogène de la composition et d'air, dans des conditions de tests spécifiés dans la norme ASTM E681-04. Elle peut être donnée par exemple en kg/m$^3$ ou en %vol.

Une composition dite « WCF » (« worst case of formulation for flammability ») est définie dans la norme ASHRAE 34-2013, comme étant une composition de formulation dont la vitesse de propagation de flamme est la plus élevée. Cette composition est très proche de la composition nominale (ladite composition nominale correspondant dans le cadre de l'invention à un fluide frigorigène selon l'invention) avec une certaine tolérance.

Une composition dite WCFF (« worst case of fractionation for flammability ») est définie dans la norme ASHRAE 34-2013, comme étant la composition dont la vitesse de propagation de flamme est la plus élevée. Cette composition est déterminée suivant une méthode bien définie dans la même norme.

Dans le cadre de la présente invention, l'inflammabilité, la vitesse de propagation de flammes et la limite inférieure d'inflammabilité sont définies et déterminées selon le test figurant dans la norme ASHRAE 34-2013, qui renvoi à la norme ASTM E681 pour ce qui est de l'appareillage utilisé.

En ce qui concerne la vitesse de propagation de flamme, la méthode des essais décrite dans la norme ASHRAE 34-2013 est celle développée dans la thèse de T. Jabbour, « Classification de l'inflammabilité des fluides frigorigènes basée sur la vitesse fondamentale de flamme » sous la direction de Denis Clodic. Thèse, Paris, 2004. Le dispositif expérimental utilise en particulier la méthode de tube en verre verticale (nombre de tube 2, longueur 150 cm, diamètre 40 cm). L'utilisation de deux tubes permet de faire deux tests avec la même concentration en même temps. Les tubes sont notamment dotés d'électrodes en tungstène, ces dernières sont placées au fond de chaque tube, distant de 6,35mm (1/4 inch) et sont reliées à un générateur de 15kV et 30mA.

Les différentes compositions testées sont qualifiées d'inflammables ou de non inflammables en tant que telles, selon les critères définis dans la norme ASHRAE 34-2013.

Le fluide frigorigène susmentionné a avantageusement une vitesse de propagation de flamme inférieure à 2 cm/s, de préférence inférieure ou égale à 1,7 cm/s, préférentiellement inférieure ou égale à 1,6 cm/s, avantageusement inférieure ou égale à 1,5 cm/s.

Le fluide frigorigène susmentionné est avantageusement classé 2L selon la norme ASHRAE 34-2013. Suivant cette norme, la classification 2L nécessite une vitesse de propagation de flamme inférieure à 10 cm/s.

Les fluides frigorigènes susmentionnés présentent avantageusement un bon compromis entre bonnes performances énergétiques, inflammabilité faible ou nulle, et faible GWP, de préférence un GWP inférieur à 150.

Du fait de leur faible inflammabilité, les fluides frigorigènes susmentionnés sont avantageusement plus sûrs lorsqu'ils sont utilisés dans le procédé de l'invention.

Les fluides frigorigènes susmentionnés peuvent être préparés par tout procédé connu, tel que par exemple par simple mélange des différents composés les uns aux autres.

Par « *composé de transfert de chaleur* », respectivement « *fluide de transfert de chaleur*» ou «fluide frigorigène », on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Le fluide frigorigène selon l'invention peut comprendre des stabilisants. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

Selon l'invention, les moyens d'inversion du fonctionnement de la boucle frigorifique réversible sont des moyens d'inversion du fonctionnement de la boucle frigorifique entre une position en mode frigorifique et une position en mode pompe à chaleur.

Les moyens d'inversion susmentionnés peuvent être des moyens de modification du parcours du fluide frigorigène dans la boucle frigorifique réversible, ou des moyens d'inversion du sens de circulation du fluide frigorigène dans ladite boucle.

Les moyens d'inversion susmentionnés peuvent être une vanne à quatre voies, une vanne d'inversion, une vanne d'arrêt (de fermeture), un détendeur, ou leurs combinaisons.

Par exemple, lors de l'inversion du mode de fonctionnement de la boucle frigorifique, le rôle d'un échangeur de chaleur peut être changé : par exemple, un échangeur de chaleur peut jouer le rôle d'un condenseur dans un mode frigorifique ou le rôle d'un évaporateur dans un mode de pompe à chaleur.

La boucle frigorifique réversible peut typiquement contenir des canalisations, tuyaux, flexibles, réservoir ou autres, dans lesquels circule le fluide frigorigène, entre les différents échangeurs, détendeurs, vannes...

Suivant le mode de fonctionnement de la boucle, frigorifique ou pompe à chaleur, le premier échangeur de chaleur peut jouer le rôle d'évaporateur ou de récupérateur d'énergie. Il en est de même pour le second échangeur de chaleur. En mode frigorifique, le second échangeur permet le refroidissement du flux d'air destiné à être pulsé à l'intérieur de l'habitacle du véhicule automobile. En mode pompe à chaleur, le second échangeur permet de réchauffer le flux d'air destiné à l'habitacle du véhicule automobile.

Le premier et second échangeurs de chaleur sont du type air / fluide frigorigène.

Dans le procédé selon la présente invention la boucle frigorifique peut être couplée thermiquement, à travers les échangeurs de chaleur, avec le circuit de refroidissement du moteur et/ou du circuit électronique. Ainsi, la boucle peut comprendre au moins un échangeur de chaleur traversé à la fois par le fluide frigorigène et par un fluide caloporteur, notamment l'air ou l'eau du circuit de refroidissement du moteur thermique ou électrique, et/ou du circuit électronique.

Selon une variante du procédé, le premier échangeur de chaleur est traversé à la fois par le fluide frigorigène et par des gaz d'échappement issus du moteur thermique du véhicule automobile ; ces derniers peuvent communiquer thermiquement avec un circuit de fluide caloporteur.

Selon une variante du procédé, le premier échangeur de chaleur est traversé à la fois par le fluide frigorigène et par la chaleur issue de la batterie ou du circuit électronique du véhicule automobile, en particulier du véhicule automobile électrique.

La boucle frigorifique dans le procédé, selon la présente invention, peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile, et/ou avec la chaleur issue du moteur électrique et/ou du circuit électronique du véhicule automobile électrique.

Le procédé selon la présente invention convient tout particulièrement lorsque la température extérieure est inférieure à 3°C, de préférence inférieure ou égale à -2°C, préférentiellement inférieure ou égale à -7°C, en particulier inférieure ou égale à -12°C, encore plus préférentiellement inférieure ou égale à -17°C, par exemple inférieure ou égale à -22°C, et avantageusement inférieure à -27°C, et de préférence supérieur ou égale à -29°C.

Le procédé selon la présente invention convient tout particulièrement lorsque la température à l'évaporateur est inférieure à 0°C, de préférence inférieure ou égale à - 5°C, préférentiellement inférieure ou égale à -10°C, en particulier inférieure ou égale à - 15°C, encore plus préférentiellement inférieure ou égale à -20°C, par exemple inférieure ou égale à -25°C, et avantageusement inférieure à -30°C, et de préférence supérieur ou égale à -32°C.

Le procédé selon la présente invention peut convenir à la fois aux véhicules automobiles à moteur thermique, aux véhicules automobiles à moteur électrique, et aux véhicules automobiles hybrides, ces derniers étant conçus pour fonctionner en alternance sur moteur thermique et moteur électrique. Il permet de gérer au mieux les apports en énergie selon les conditions climatiques (chaud ou froid) tant pour l'habitacle que pour la batterie et notamment d'apporter du chaud ou du froid à la batterie à travers un circuit de fluide caloporteur.

La boucle frigorifique réversible, dans laquelle circule le fluide frigorigène tel que défini ci-dessus, installée dans des véhicules automobiles convient particulièrement pour la récupération d'énergie du moteur thermique et/ou de la batterie électrique et/ou du circuit électronique, utile pour le chauffage de l'habitacle et le moteur pendant une phase de démarrage à froid. Cette boucle frigorifique réversible, lorsqu'elle comprend une pompe, peut fonctionner en mode Rankine (c'est-à-dire le compresseur fonctionne comme une turbine) pour valoriser l'énergie thermique produite par le moteur thermique et véhiculée ensuite par le fluide frigorigène, après transfert thermique.

La présente invention concerne également l'utilisation d'un boucle frigorifique réversible dans laquelle circule un fluide frigorigène comprenant (de préférence constitué):

- de 4% à 6% en poids de difluorométhane (HFC-32);
- de 2,5% à 3,5% en poids de pentafluoroéthane (HFC-125) ; et
- de 91% à 93,5% en poids de tétrafluoropropène ;

pour chauffer et/ou climatiser un habitacle de véhicule automobile ;
ladite boucle frigorifique comprenant un premier échangeur de chaleur, un détendeur, un second échangeur de chaleur, un compresseur et des moyens d'inversion du fonctionnement de la boucle frigorifique réversible.

L'invention a également pour objet un dispositif comprenant la boucle frigorifique tel que décrit précédemment, en particulier la boucle frigorifique comprend un premier échangeur de chaleur, un détendeur, un second échangeur de chaleur, un compresseur et des moyens d'inversion du fonctionnement de la boucle frigorifique réversible.

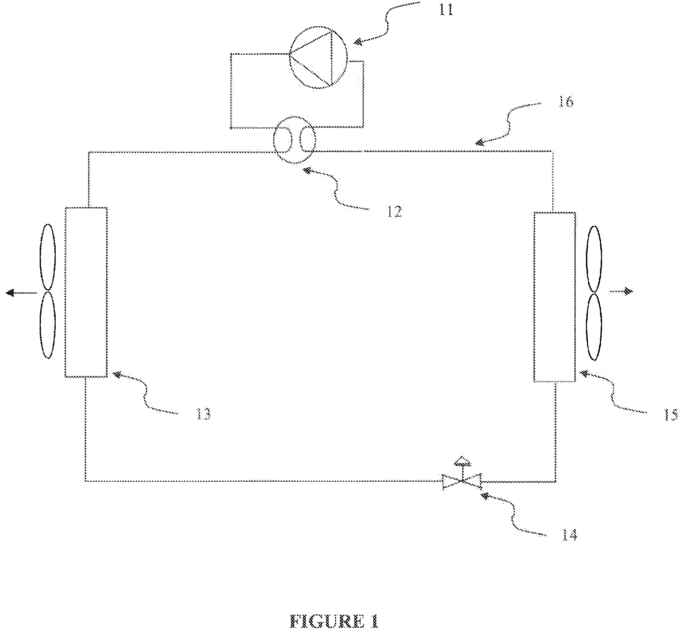

Selon un premier mode de réalisation de l'invention, représenté schématiquement par la Figure 1, la boucle frigorifique (16) comprend un premier échangeur de chaleur (13), un détendeur (14), un second échangeur de chaleur (15), un compresseur (11) et une vanne à quatre voies (12). Le premier et second échangeurs de chaleur sont du type air/ fluide frigorigène. Le premier échangeur de chaleur (13) est traversé par le fluide frigorigène de la boucle (16) et par le flux d'air amené par un ventilateur. Une partie ou la totalité de ce même flux d'air, peut traverser aussi un échangeur de chaleur du circuit de refroidissement du moteur et/ou du circuit électronique (non représenté sur la figure). De la même manière, le second échangeur (15) est traversé par un flux d'air amené par un ventilateur. Une partie ou la totalité de ce flux d'air peut traverser aussi un autre échangeur de chaleur du circuit de refroidissement du moteur et/ou du circuit électronique (non représenté sur la figure). Le sens de circulation de l'air est fonction du mode de fonctionnement de la boucle (16) et des besoins du moteur thermique ou électrique. Ainsi, quand le moteur thermique ou électrique est en fonctionnement et la boucle (16) en mode pompe à chaleur, l'air peut être chauffé par l'échangeur du circuit de refroidissement du moteur thermique ou électrique puis, soufflé sur l'échangeur (13) pour accélérer l'évaporation du fluide de la boucle (16) et donc améliorer les performances de cette boucle.

Les échangeurs du circuit de refroidissement peuvent être activés à l'aide des vannes suivant les besoins du moteur thermique ou électrique (chauffage de l'air entrant dans le moteur ou valorisation d'énergie produite par ce moteur).

En mode frigorifique, le fluide frigorigène mis en mouvement par le compresseur (11) traverse, via la vanne (12), l'échangeur (13) jouant le rôle de condenseur (c'est-à-dire dégage des calories vers l'extérieur), ensuite le détendeur (14), puis l'échangeur (15) jouant le rôle d'évaporateur permettant ainsi le refroidissement du flux d'air destiné à être pulsé à l'intérieur de l'habitacle du véhicule automobile.

Le mode frigorifique selon l'invention peut typiquement être un mode de climatisation.

En mode pompe à chaleur, le sens d'écoulement du fluide frigorigène est inversé par l'intermédiaire de la vanne (12). L'échangeur de chaleur (15) joue le rôle de condenseur tandis que l'échangeur (13) joue le rôle d'évaporateur. L'échangeur de chaleur (15) permet alors de réchauffer le flux d'air destiné à l'habitacle du véhicule automobile.

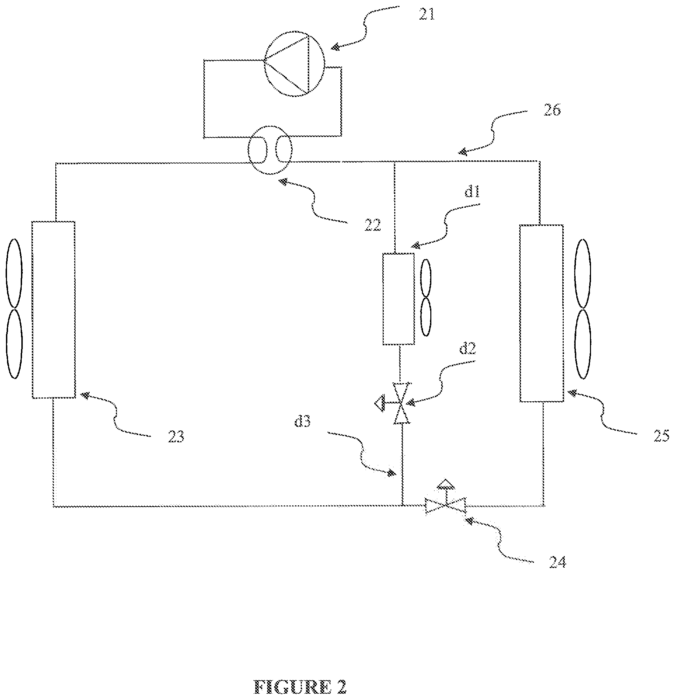

Selon un deuxième mode de réalisation de l'invention, représenté schématiquement par la Figure 2, la boucle frigorifique (26) comprend un premier échangeur de chaleur (23), un détendeur (24), un second échangeur de chaleur (25), un compresseur (21), une vanne à quatre voies (22) et une branche de dérivation (d3) montée d'une part à la sortie de l'échangeur (23), et d'autre part à la sortie de l'échangeur (25), en considérant la circulation du fluide en mode frigorifique. Cette branche comprend un échangeur de chaleur (d1) traversé par un flux d'air ou un flux de gaz d'échappement et un détendeur (d2). Le premier et second échangeurs (23 et 25) de chaleur sont du type air/ fluide frigorigène. Le premier échangeur de chaleur (23) est traversé par le fluide frigorigène de la boucle (26) et par le flux d'air amené par un ventilateur. Une partie ou la totalité de ce même flux d'air, peut traverser aussi un échangeur de chaleur du circuit de refroidissement du moteur ou du circuit électronique (non représenté sur la figure). De la même manière, le second échangeur (25) est traversé par un flux d'air amené par un ventilateur. Une partie ou la totalité de ce flux d'air peut traverser aussi un autre échangeur de chaleur du circuit de refroidissement du moteur ou du circuit électronique (non représenté sur la figure). Le sens de circulation de l'air est fonction du mode de fonctionnement de la boucle (26) et des besoins du moteur thermique et/ou électrique. A titre d'exemple, quand le moteur thermique et/ou électrique est en fonctionnement et la boucle (26) en mode pompe à chaleur, l'air peut être chauffé par l'échangeur du circuit de refroidissement du moteur thermique et/ou électrique puis, soufflé sur l'échangeur (23) pour accélérer l'évaporation du fluide de la boucle (26) et améliorer les performances de cette boucle.

Les échangeurs du circuit de refroidissement peuvent être activés à l'aide des vannes suivant les besoins du moteur thermique ou électrique (chauffage de l'air entrant dans le moteur ou valorisation d'énergie produite par ce moteur).

L'échangeur de chaleur (d1) peut aussi être activé suivant les besoins énergétiques que ce soit en mode frigorifique ou en mode pompe à chaleur. Des vannes d'arrêt (non représentées sur la figure 2) peuvent être installées sur la branche (d3) pour activer ou désactiver cette branche.

L'échangeur (d1) est traversé par un flux d'air amené par un ventilateur. Ce même flux d'air peut traverser un autre échangeur de chaleur du circuit de refroidissement du moteur et/ou du circuit électronique et aussi d'autres échangeurs placés sur le circuit des gaz d'échappement, sur l'arrivée d'air au moteur ou sur la batterie dans les voitures électriques ou hybrides.

En mode frigorifique, le fluide frigorigène est mis en mouvement par le compresseur (21) traverse, via la vanne (22), l'échangeur (23) jouant le rôle de condenseur (c'est-à-dire dégage des calories vers l'extérieur), il traverse ensuite:

- le détendeur (24) puis l'échangeur (25) jouant le rôle d'évaporateur permettant ainsi le refroidissement du flux d'air destiné à être pulsé à l'intérieur de l'habitacle du véhicule automobile ; et/ou
- le détendeur (d2) puis l'échangeur (d1) jouant le rôle d'évaporateur permettant par exemple le refroidissement du flux d'air destiné à refroidir le moteur électrique et/ou le circuit électronique et/ou la batterie

En mode pompe à chaleur, le sens d'écoulement du fluide frigorigène est inversé par l'intermédiaire de la vanne (22). L'échangeur de chaleur (25) ainsi que l'échangeur de chaleur (d1) jouent le rôle de condenseurs tandis que l'échangeur (23) joue le rôle d'évaporateur. Les échangeurs de chaleur (25) et (d1) permettent alors de réchauffer le flux d'air destiné à l'habitacle du véhicule automobile et la batterie.

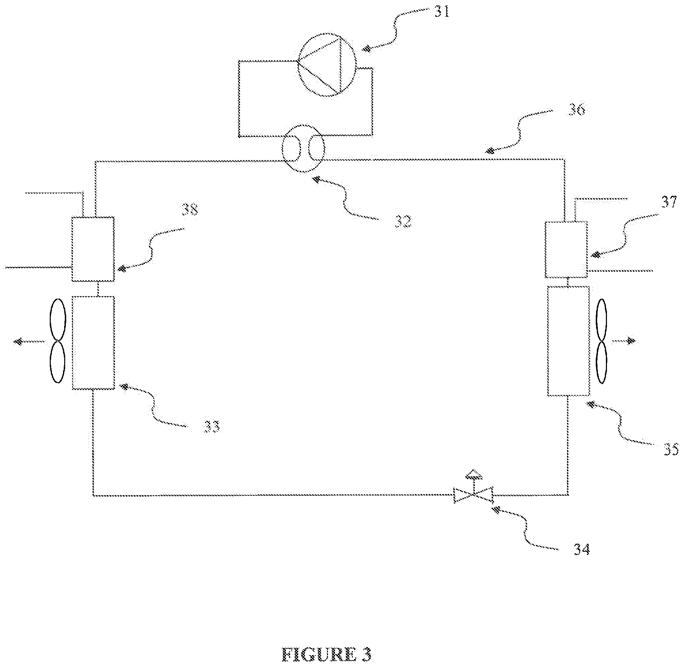

Selon un troisième mode de réalisation de l'invention, représenté schématiquement par la Figure 3, la boucle frigorifique (36) comprend un premier échangeur de chaleur (33), un détendeur (34), un second échangeur de chaleur (35), un compresseur (31) et une vanne à quatre voies (32). Le premier et second échangeurs (33 et 35) de chaleur sont du type air/ fluide frigorigène. Le fonctionnement des échangeurs (33 et 35) est identique au premier mode de réalisation présenté à la Figure 1. Au moins un échangeur fluide/liquide (38 et/ou 37) peut être installé à la fois sur le circuit de la boucle frigorifique (36) et sur le circuit de refroidissement du moteur thermique ou électrique ou/et batterie, ou sur un circuit secondaire d'eau glycolée.

La figure 3 divulgue un mode de réalisation avec deux échangeurs de chaleur fluide/liquide (37 et 38). Toutefois, selon le troisième mode de réalisation susmentionné, la boucle frigorifique peut comprendre soit l'échangeur (37) ou soit l'échangeur (38) (mode non représenté sur la figure 3).

L'échangeur fluide/liquide (37 ou 38) peut être monté en série de l'échangeur de chaleur (respectivement 35 ou 33) (tel que schématiquement représenté sur la Figure 3), ou en parallèle de celui-ci. Lorsqu'il est monté en série de l'échangeur de chaleur (35 ou 33), l'échangeur (37 ou 38) peut être placé avant ou après l'échangeur (35 ou 33) dans le sens de circulation du fluide frigorigène.

L'installation des échangeurs fluide/liquide sans passer par un fluide intermédiaire gazeux (air) contribue à l'amélioration des échanges thermiques par rapport aux échangeurs air / fluide.

En mode frigorifique, le fluide frigorigène mis en mouvement par le compresseur (31) traverse, via la vanne à quatre voies (32), éventuellement l'échangeur (38) si présent jouant le rôle de condenseur (dégageant calories à travers un circuit secondaire vers l'air admit au moteur thermique et/ou un système de valorisation d'énergie), puis l'échangeur (33) jouant le rôle de condenseur (c'est-à-dire dégage des calories vers l'extérieur), ensuite le détendeur (34), puis l'échangeur (35) jouant le rôle d'évaporateur permettant ainsi le refroidissement du flux d'air destiné à être pulsé à l'intérieur de l'habitacle du véhicule automobile, et éventuellement l'échangeur (37) si présent, jouant le rôle d'évaporateur permettant ainsi le refroidissement d'un liquide permettant à son tour de refroidir l'air à l'intérieur de l'habitacle du véhicule par l'intermédiaire d'un autre échangeur de chaleur liquide/air et/ou de refroidir directement la batterie.

En mode pompe à chaleur, le sens d'écoulement du fluide frigorigène est inversé par l'intermédiaire de la vanne (32). L'échangeur de chaleur (37), si présent, joue le rôle de condenseur, l'échangeur (35) joue également le rôle de condenseur tandis que l'échangeur (33) joue le rôle d'évaporateur, tout comme l'échangeur (38) si présent. L'échangeur de chaleur (35) permet alors de réchauffer le flux d'air destiné à l'habitacle du véhicule automobile. L'échangeur de chaleur (37) permet alors de réchauffer un liquide permettant à son tour de réchauffer le flux d'air destiné à l'habitacle du véhicule automobile par l'intermédiaire d'un autre échangeur de chaleur liquide/air et/ou de chauffer directement la batterie.

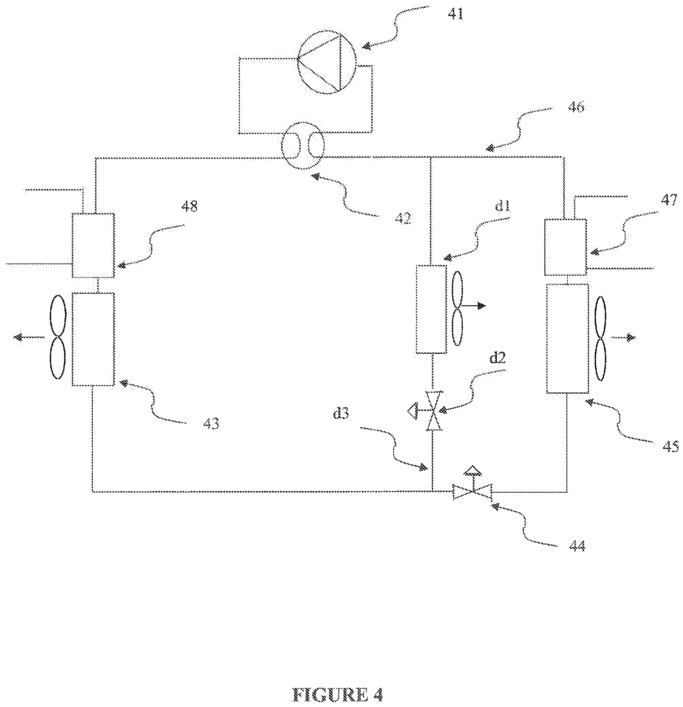

Selon un quatrième mode de réalisation de l'invention, représenté schématiquement par la Figure 4, la boucle frigorifique (46) comprend une première série échangeur de chaleur (43 et 48), un détendeur (44), une seconde série échangeur de chaleur (45 et 47), un compresseur (41) et une vanne à quatre voies (42). Une branche de dérivation (d1) montée d'une part à la sortie de l'échangeur (43), et d'autre part à la sortie de l'échangeur (47), en considérant la circulation du fluide en mode frigorifique. Cette branche comprend un échangeur de chaleur (d1) traversé par un flux d'air ou un flux de gaz d'échappement et un détendeur (d2). Le fonctionnement de cette branche est identique au second mode de réalisation présenté à la Figure 2.

Les échangeurs (43 et 45) de chaleur sont du type air/ fluide frigorigène et les échangeurs (48 et 47) sont du type liquide/fluide frigorigène. Le fonctionnement de ces échangeurs est identique au troisième mode de réalisation présenté à la Figure 3.

Le fonctionnement de la boucle selon le quatrième mode de réalisation correspond typiquement à la combinaison des fonctionnements du second et troisième mode de réalisation tel que décrits ci-dessus. Ainsi, toutes les caractéristiques de ces deux modes de réalisation s'appliquent pour ce quatrième mode de réalisation.

En particulier, bien que la figure 4 divulgue un mode de réalisation avec deux échangeurs de chaleur fluide/liquide (47 et 48), la boucle frigorifique peut comprendre soit l'échangeur (47) ou soit l'échangeur (48) (mode non représenté sur la figure 4).

L'échangeur fluide/liquide (47 ou 48) peut être monté en série de l'échangeur de chaleur (respectivement 45 ou 43) (tel que schématiquement représenté sur la Figure 4), ou en parallèle de celui-ci. Lorsqu'il est monté en série de l'échangeur de chaleur (45 ou 43), l'échangeur (47 ou 48) peut être placé avant ou après l'échangeur (45 ou 43) dans le sens de circulation du fluide frigorigène.

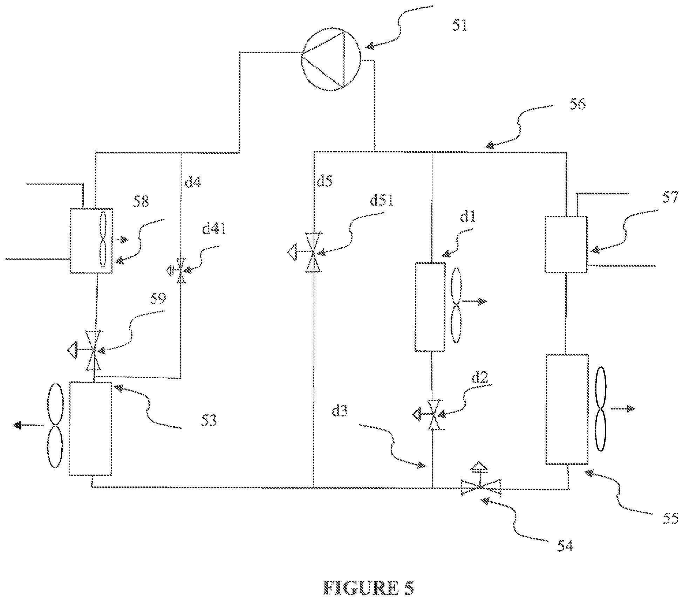

Selon un cinquième mode de réalisation de l'invention, représenté schématiquement par les Figures 5, 6 et 7, la boucle frigorifique (56) comprend une première série échangeur de chaleur (53 et 58), un détendeur (59), un détendeur (54), une seconde série échangeur de chaleur (55 et 57), un compresseur (51).

La boucle comprend également une branche de dérivation (d3) montée d'une part à la sortie de l'échangeur (53), et d'autre part à la sortie de l'échangeur (57), en considérant la circulation du fluide en mode frigorifique. Cette branche comprend un échangeur de chaleur (d1) traversé par un flux d'air ou un flux de gaz d'échappement et un détendeur (d2). Le fonctionnement de cette branche est identique au second mode de réalisation présenté à la Figure 2.

La boucle frigorifique comprend également une branche de dérivation (d4) comprenant une vanne (d41), et une autre branche de dérivation (d5) comprenant une vanne (d51).

Les échangeurs de chaleur (53 et 55) sont du type air/ fluide frigorigène, l'échangeur (53) étant de préférence un échangeur air extérieur/fluide frigorigène.

L'échangeur (57) est du type liquide/fluide frigorigène. Le fonctionnement de cet échangeur est identique à l'échangeur (37) du troisième mode de réalisation présenté à la Figure 3.

L'échangeur (58) est du type liquide/fluide frigorigène ou air/fluide frigorigène.

Comme indiqué ci-dessus pour le troisième mode de réalisation, les figures 5, 6 et 7 divulguent des modes de réalisation avec deux échangeurs de chaleur (57 et 58). Toutefois, selon le cinquième mode de réalisation susmentionné, la boucle frigorifique peut comprendre soit l'échangeur (57) ou soit l'échangeur (58). De préférence, l'échangeur (57) n'est pas présent dans la boucle.

L'échangeur (57 ou 58) peut être monté en série de l'échangeur de chaleur (respectivement 55 ou 53) (tel que schématiquement représenté sur les Figures 5, 6 et 7), ou en parallèle de celui-ci. Lorsqu'il est monté en série de l'échangeur de chaleur (55 ou 53), l'échangeur (57 ou 58) peut être placé avant ou après l'échangeur (55 ou 53) dans le sens de circulation du fluide frigorigène.

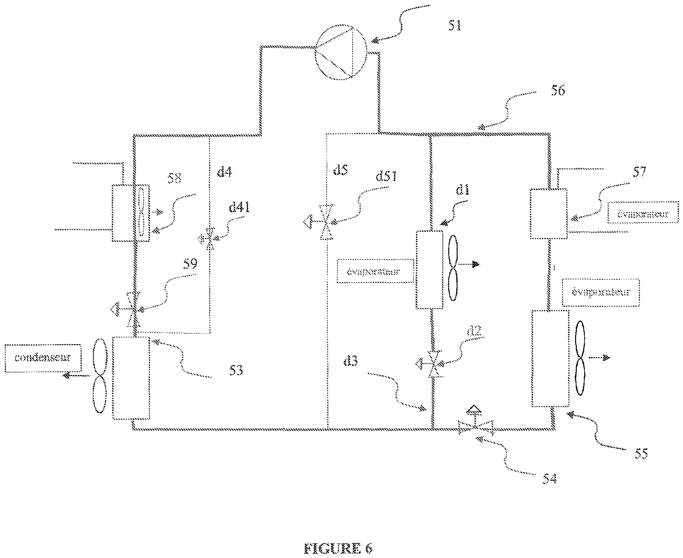

La figure 6 représente le mode frigorifique du cinquième mode de réalisation. Dans ce mode frigorifique, le fluide frigorigène est mis en mouvement par le compresseur (51) et traverse :

- soit l'échangeur (58) (si présent) sans que celui-ci ne fonctionne (le fluide ne fait que passer sans que l'échangeur ne soit mis en marche), puis le détendeur (59) sans que celui-ci ne fonctionne (ouvert entièrement) ou alors le fluide frigorigène passe par un by-pass (non représenté sur les figures 5, 6 et 7) permettant de contourner le détendeur,
- soit une vanne (non représentée sur les figures) en amont de l'échangeur (58) permet de contourner l'échangeur (58) pour que le fluide passe par la dérivation (d4) (la vanne (d41) étant ouverte).

La vanne (d51) étant fermée, le fluide traverse ensuite :

- l'échangeur (53) jouant le rôle de condenseur (c'est-à-dire dégage des calories vers l'extérieur), ensuite le détendeur (54), puis l'échangeur (55) jouant le rôle d'évaporateur permettant ainsi le refroidissement du flux d'air destiné à être pulsé à l'intérieur de l'habitacle du véhicule automobile, et éventuellement l'échangeur (57) si présent, jouant le rôle d'évaporateur permettant ainsi le refroidissement d'un liquide permettant à son tour de refroidir l'air à l'intérieur de l'habitacle du véhicule par l'intermédiaire d'un autre échangeur de chaleur liquide/air ; et/ou
- le détendeur (d2) puis l'échangeur (d1) jouant le rôle d'évaporateur permettant par exemple le refroidissement du flux d'air destiné à refroidir le moteur électrique et/ou le circuit électronique et/ou la batterie.

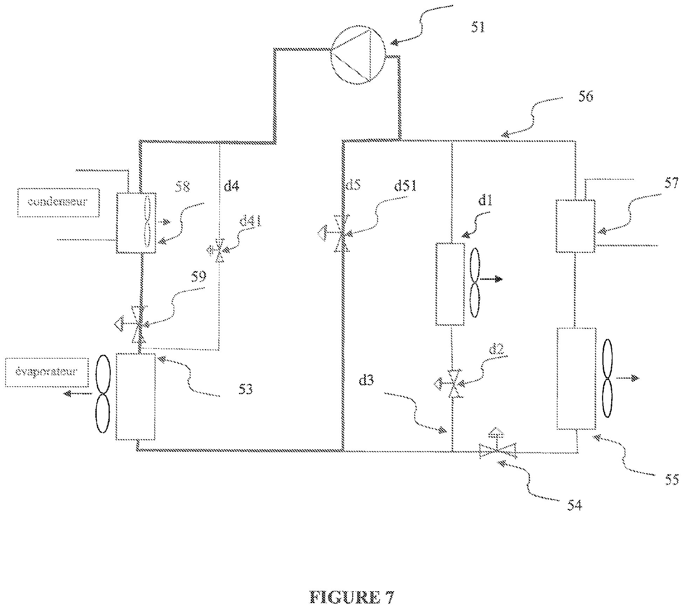

La figure 7 représente le mode chauffage du cinquième mode de réalisation. Dans ce mode chauffage, le fluide frigorigène est mis en mouvement par le compresseur (51). La vanne (d41) étant fermée, le fluide traverse ensuite l'échangeur (58) jouant le rôle de condenseur, puis le détendeur (59), et l'échangeur de chaleur (53) jouant le rôle d'évaporateur. Les vannes (54) et (d2) étant fermées, le fluide frigorigène traverse ensuite la dérivation (d5) par l'intermédiaire de la vanne ouverte (d51).

L'échangeur de chaleur (58), joue le rôle de condenseur et permet alors de réchauffer le flux d'air destiné à l'habitacle du véhicule automobile (s'il s'agit d'un échangeur air/fluide frigorigène), ou alors de réchauffer un liquide permettant à son tour de réchauffer le flux d'air destiné à l'habitacle du véhicule automobile par l'intermédiaire d'un autre échangeur de chaleur liquide/air (s'il s'agit d'un échangeur liquide/fluide frigorigène), le même échangeur pouvant chauffer aussi la batterie si nécessaire.

Les figures 1 à 4 décrivent des modes de réalisation dans lesquels les moyens d'inversion du fonctionnement de la boucle réversible est un moyen d'inversion du sens de circulation du fluide frigorigène, tel que par exemple une vanne 4 voies.

Les figures 5, 6 et 7 décrivent des modes de réalisation dans lesquels les moyens d'inversion du fonctionnement de la boucle réversible sont des vannes d'arrêts (de fermeture), permettant notamment de modifier le parcours du fluide frigorigène et l'inversion de la fonction de certains échangeurs de chaleur.

Dans tous les modes de réalisation susmentionnés, les systèmes décrits peuvent comportés des vannes d'arrêt (de fermeture) ou des dérivations supplémentaires (même si elles ne sont pas présentes sur les figures 1 à 7).

Tous les modes de réalisation décrits ci-dessus peuvent être combinés les uns avec les autres.

Dans le cadre de l'invention, par « comprise entre x et y », ou « de x à y », on entend un intervalle dans lequel les bornes x et y sont incluses. Par exemple, la gamme «comprise entre 1 et 2% » inclus notamment les valeurs 1 et 2%.

Les exemples suivants illustrent l'invention sans toutefois la limiter.

PARTIE EXPERIMENTALE

Dans les tableaux qui suivent, « $T_x$ » désigne la température à l'emplacement « x », « $P_x$» désigne la pression du fluide à l'emplacement « x », « % Y/R134a » désigne le pourcentage de la propriété « Y » du fluide par rapport au fluide de référence R134a. COP : coefficient de performance et est défini, lorsqu'il s'agit d'une pompe à chaleur comme étant la puissance chaude utile fournie par le système (CAP) sur la puissance apportée ou consommée par le système par unité de volume déplacé.

Rendement isentropique du compresseur : c'est le rapport entre l'énergie réelle transmise au fluide et l'énergie isentropique.

$$\eta = a + b\,\tau + c \cdot \tau^2 + d \cdot \tau^3 + e \cdot \tau^4$$

$\eta$ : rendement isentropique
$\tau$ : taux de compression
a, b, c et e: cons tan tes

Les valeurs des constantes a, b, c, d et e sont déterminées suivant une courbe typique de rendement, d'après le "Handbook of air conditioning and réfrigération, Shan k. Wang" Les mélanges selon l'invention sont les suivants :

| Nom | R1234yf | R32 | R125 |
|-----|---------|-----|------|
| M1 | 93.5 | 4 | 2.5 |
| M2 | 93.0 | 4 | 3 |
| M3 | 92.5 | 4 | 3.5 |
| M4 | 92.5 | 5 | 2.5 |
| M5 | 92.0 | 5 | 3 |
| M6 | 91.5 | 5 | 3.5 |
| M7 | 91.5 | 6 | 2.5 |
| M8 | 91.0 | 6 | 3 |
| M9 | 90.5 | 6 | 3.5 |

Soit une installation de pompe à chaleur réversible qui fonctionne entre une température moyenne d'évaporation comprise entre 0° et -30°C, une température moyenne de condensation à 30°C, une surchauffe de 17°C et avec un échangeur interne.

Exemple 1A : Résultats à 0°C température moyenne d'évaporation

| Produit | $T_{cond}$ | $T_{evap}$ | $P_{condenseur}$ | $P_{évaporateur}$ | $T_{entrée\ évaporateur}$ | $T_{entrée\ comresseur}$ | $T_{sortie\ compresseur}$ | $T_{entrée\ détendeur}$ | rapport de pression | rendement isentropique | % CAP | % COP |
|---|---|---|---|---|---|---|---|---|---|---|---|---|
| R134a | 30 | 0 | 7,7 | 2,9 | 0 | 17 | 55 | 19 | 2,63 | 84 | 100 | 100 |
| M1 | 30 | 0 | 9,1 | 3,6 | -2 | 19 | 52 | 16 | 2,50 | 84 | 116 | 100 |
| M2 | 30 | 0 | 9,1 | 3,6 | -2 | 19 | 52 | 16 | 2,50 | 84 | 116 | 100 |
| M3 | 30 | 0 | 9,1 | 3,6 | -2 | 19 | 52 | 16 | 2,50 | 84 | 116 | 100 |
| M4 | 30 | 0 | 9,3 | 3,8 | -2 | 19 | 52 | 16 | 2,47 | 83 | 120 | 101 |
| M5 | 30 | 0 | 9,3 | 3,8 | -2 | 19 | 52 | 16 | 2,47 | 83 | 120 | 101 |
| M6 | 30 | 0 | 9,3 | 3,8 | -2 | 19 | 52 | 16 | 2,47 | 83 | 120 | 101 |
| M7 | 30 | 0 | 9,6 | 3,8 | -2 | 19 | 53 | 16 | 2,49 | 84 | 122 | 100 |
| M8 | 30 | 0 | 9,6 | 3,9 | -2 | 19 | 53 | 16 | 2,49 | 84 | 122 | 100 |
| M9 | 30 | 0 | 9,6 | 3,9 | -2 | 19 | 53 | 16 | 2,49 | 84 | 123 | 100 |

Exemple 1B : Résultats à -5°C température moyenne d'évaporation

| Produit | $T_{cond}$ | $T_{evap}$ | $P_{condenseur}$ | $P_{évaporateur}$ | $T_{entrée\ évaporateur}$ | $T_{entrée\ comresseur}$ | $T_{sortie\ compresseur}$ | $T_{entrée\ détendeur}$ | rapport de pression | rendement isentropique | % CAP | % COP |
|---|---|---|---|---|---|---|---|---|---|---|---|---|
| R134a | 30 | -5 | 7,7 | 2,4 | -5 | 12 | 57 | 20 | 3,16 | 84 | 100 | 100 |
| M1 | 30 | -5 | 9,1 | 3,1 | -7 | 14 | 52 | 17 | 2,96 | 84 | 116 | 100 |
| M2 | 30 | -5 | 9,1 | 3,1 | -7 | 14 | 52 | 17 | 2,96 | 84 | 117 | 100 |
| M3 | 30 | -5 | 9,1 | 3,1 | -7 | 14 | 52 | 17 | 2,96 | 84 | 117 | 100 |
| M4 | 30 | -5 | 9,3 | 3,1 | -7 | 14 | 53 | 16 | 2,96 | 84 | 119 | 100 |
| M5 | 30 | -5 | 9,3 | 3,1 | -7 | 14 | 53 | 16 | 2,96 | 84 | 120 | 100 |
| M6 | 30 | -5 | 9,3 | 3,2 | -7 | 14 | 53 | 16 | 2,94 | 84 | 121 | 100 |
| M7 | 30 | -5 | 9,6 | 3,2 | -7 | 14 | 53 | 16 | 2,95 | 84 | 123 | 100 |
| M8 | 30 | -5 | 9,6 | 3,2 | -7 | 14 | 53 | 16 | 2,95 | 84 | 123 | 100 |
| M9 | 30 | -5 | 9,6 | 3,3 | -7 | 14 | 54 | 16 | 2,95 | 84 | 124 | 100 |

Exemple 1C : Résultats à -10°C température moyenne d'évaporation

| Produit | $T_{cond}$ | $T_{evap}$ | $P_{condenseur}$ | $P_{evaporateur}$ | $T_{entrée évaporateur}$ | $T_{entrée comresseur}$ | $T_{sortie compresseur}$ | $T_{entrée détendeur}$ | rapport de pression | rendement isentropique | % CAP | % COP |
|---|---|---|---|---|---|---|---|---|---|---|---|---|
| R134a | 30 | -10 | 7,7 | 2,0 | -10 | 7 | 58 | 20 | 3,84 | 83 | 100 | 100 |
| M1 | 30 | -10 | 9,1 | 2,6 | -11 | 9 | 53 | 17 | 3,54 | 84 | 117 | 100 |
| M2 | 30 | -10 | 9,1 | 2,6 | -11 | 9 | 53 | 17 | 3,54 | 84 | 118 | 100 |
| M3 | 30 | -10 | 9,1 | 2,6 | -11 | 9 | 53 | 17 | 3,54 | 84 | 118 | 100 |
| M4 | 30 | -10 | 9,3 | 2,6 | -12 | 9 | 53 | 16 | 3,54 | 84 | 120 | 100 |
| M5 | 30 | -10 | 9,3 | 2,6 | -12 | 9 | 53 | 16 | 3,53 | 84 | 121 | 100 |
| M6 | 30 | -10 | 9,3 | 2,6 | -12 | 9 | 53 | 16 | 3,53 | 84 | 121 | 100 |
| M7 | 30 | -10 | 9,5 | 2,7 | -12 | 9 | 54 | 16 | 3,52 | 84 | 124 | 100 |
| M8 | 30 | -10 | 9,5 | 2,7 | -12 | 9 | 54 | 16 | 3,52 | 84 | 124 | 100 |
| M9 | 30 | -10 | 9,6 | 2,7 | -12 | 9 | 54 | 16 | 3,52 | 84 | 124 | 100 |

Exemple 1 D : Résultats à -20°C température moyenne d'évaporation

| Produit | $T_{cond}$ | $T_{evap}$ | $P_{condenseur}$ | $P_{evaporateur}$ | $T_{entrée évaporateur}$ | $T_{entrée comresseur}$ | $T_{sortie compresseur}$ | $T_{entrée détendeur}$ | rapport de pression | rendement isentropique | % CAP | % COP |
|---|---|---|---|---|---|---|---|---|---|---|---|---|
| R134a | 30 | -20 | 7,7 | 1,3 | -20 | -3 | 65 | 20 | 5,80 | 79 | 100 | 100 |
| M1 | 30 | -20 | 9,0 | 1,7 | -21 | -2 | 55 | 17 | 5,25 | 81 | 117 | 101 |
| M2 | 30 | -20 | 9,1 | 1,7 | -21 | -2 | 55 | 17 | 5,25 | 81 | 118 | 101 |
| M3 | 30 | -20 | 9,1 | 1,7 | -21 | -2 | 55 | 17 | 5,25 | 81 | 118 | 101 |
| M4 | 30 | -20 | 9,3 | 1,8 | -21 | -2 | 56 | 17 | 5,23 | 81 | 121 | 101 |
| M5 | 30 | -20 | 9,3 | 1,8 | -21 | -2 | 56 | 17 | 5,23 | 81 | 121 | 101 |
| M6 | 30 | -20 | 9,3 | 1,8 | -21 | -2 | 56 | 17 | 5,22 | 81 | 122 | 101 |
| M7 | 30 | -20 | 9,6 | 1,8 | -22 | -1 | 57 | 17 | 5,26 | 81 | 124 | 100 |
| M8 | 30 | -20 | 9,6 | 1,8 | -22 | -1 | 57 | 17 | 5,26 | 81 | 124 | 100 |
| M9 | 30 | -20 | 9,6 | 1,8 | -22 | -1 | 57 | 17 | 5,26 | 81 | 125 | 100 |

Exemple 1E : Résultats à -30°C température moyenne d'évaporation

| Produit | $T_{cond}$ | $T_{evap}$ | $P_{condenseur}$ | $P_{evaporateur}$ | $T_{entrée\ évaporateur}$ | $T_{entrée\ comresseur}$ | $T_{sortie\ compresseur}$ | $T_{entrée\ détendeur}$ | rapport de pression | rendement isentropique | % CAP | % COP |
|---|---|---|---|---|---|---|---|---|---|---|---|---|
| R134a | 30 | -30 | 7,7 | 0,8 | -30 | -13 | 81 | 21 | 9,11 | 69 | 100 | 100 |
| M1 | 30 | -30 | 9,1 | 1,1 | -31 | -12 | 65 | 18 | 8,05 | 72 | 118 | 102 |
| M2 | 30 | -30 | 9,1 | 1,1 | -31 | -12 | 65 | 18 | 8,04 | 72 | 119 | 102 |
| M3 | 30 | -30 | 9,1 | 1,1 | -31 | -12 | 65 | 18 | 8,04 | 72 | 119 | 102 |
| M4 | 30 | -30 | 9,3 | 1,2 | -31 | -12 | 66 | 17 | 8,02 | 72 | 121 | 102 |
| M5 | 30 | -30 | 9,3 | 1,2 | -31 | -12 | 66 | 17 | 8,02 | 72 | 122 | 102 |
| M6 | 30 | -30 | 9,3 | 1,2 | -31 | -12 | 66 | 17 | 8,02 | 72 | 122 | 102 |
| M7 | 30 | -30 | 9,6 | 1,2 | -31 | -11 | 67 | 17 | 7,96 | 72 | 126 | 103 |
| M8 | 30 | -30 | 9,6 | 1,2 | -31 | -11 | 67 | 17 | 7,96 | 72 | 126 | 103 |
| M9 | 30 | -30 | 9,6 | 1,2 | -31 | -11 | 67 | 17 | 7,95 | 72 | 126 | 103 |

Il ressort des exemples 1A à 1E que les mélanges selon l'invention montrent une pression à l'évaporateur supérieure à la pression du HFC-134a, ce qui aide à limiter l'infiltration d'air à l'intérieur du système, en particulier quand ce système fonctionne à basse température, par exemple à une température à l'évaporateur de 0°C, -5°C, -10°C, -20°C, et -30°C.

Pour un même compresseur, les mélanges de l'invention sont avantageusement plus performants que le HFC-134a. Les exemples ci-dessus montrent en effet que les mélanges de l'invention conduisent à un rendement au compresseur similaire ou supérieur à celui du HFC-134a, une meilleure capacité, et un COP identique voire meilleur.

## Revendications

1. Procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du fonctionnement de la boucle frigorifique réversible, **caractérisé en ce que** le fluide frigorigène comprend :

   - de 4% à 6% en poids de difluorométhane ;
   - de 2,5% à 3,5% en poids de pentafluoroéthane ; et
   - de 91% à 93,5% en poids de tétrafluoropropène, de préférence du 2,3,3,3-tétrafluoropropène.

2. Procédé selon la revendication 1, dans lequel le fluide frigorigène comprend :

   - de 4,5% à 5,5% en poids de difluorométhane ;
   - de 2,5% à 3,5% en poids de pentafluoroéthane ; et
   - de 91% à 93% en poids de tétrafluoropropène, en particulier du 2,3,3,3-tétrafluoropropène, de préférence de 91% à 92% en poids de tétrafluoropropène.

3. Procédé selon la revendication 1 ou 2, dans lequel le fluide frigorigène comprend :

   - de 4,5% à 5,5% en poids de difluorométhane ;

- de 2,5% à 3,5% en poids de pentafluoroéthane ; et
- de 91,5% à 93% en poids de tétrafluoropropène.

4. Procédé selon l'une des revendications 1 à 2, dans lequel le fluide frigorigène comprend :

- de 4,5% à 5,5% en poids de difluorométhane ;
- de 3% à 3,5% en poids de pentafluoroéthane ; et
- de 91% à 92% en poids de tétrafluoropropène.

5. Procédé selon l'une des revendications 1 à 4, dans lequel le fluide frigorigène est choisi dans le groupe constitué de :

- 5% en poids de difluorométhane, 3,3% en poids de pentafluoroéthane, et 91,7% en poids de tétrafluoropropène, en particulier de 2,3,3,3-tétrafluoropropène ;
- 5% en poids de difluorométhane, 3% en poids de pentafluoroéthane, et 92% en poids de tétrafluoropropène, en particulier de 2,3,3,3-tétrafluoropropène ;
- 5% en poids de difluorométhane, 3,1% en poids de pentafluoroéthane, et 91,9% en poids de tétrafluoropropène, en particulier de 2,3,3,3-tétrafluoropropène ;
- 5% en poids de difluorométhane, 3,2% en poids de pentafluoroéthane, et 91,8% en poids de tétrafluoropropène, en particulier de 2,3,3,3-tétrafluoropropène ;
- 6% en poids de difluorométhane, 3% en poids de pentafluoroéthane, et 91% en poids de tétrafluoropropène, en particulier de 2,3,3,3-tétrafluoropropène ; et
- 6% en poids de difluorométhane, 2,5% en poids de pentafluoroéthane, et 91,5 % en poids de tétrafluoropropène, en particulier de 2,3,3,3-tétrafluoropropène.

6. Procédé selon l'une des revendications 1 à 5, dans lequel le fluide frigorigène a un GWP inférieur à 150, de préférence inférieur ou égal à 140, en particulier inférieur ou égal à 130.

7. Procédé selon l'une des revendications 1 à 6, dans lequel le fluide frigorigène a une limite inférieure d'inflammabilité supérieure à 285 g/m$^3$, de préférence supérieure ou égale à 287 g/m$^3$, en particulier supérieure ou égale à 290 g/m$^3$.

8. Procédé selon l'une des revendications 1 à 7, dans lequel le fluide frigorigène a une vitesse de propagation de flamme inférieure à 2 cm/s, de préférence inférieure ou égale à 1,7 cm/s, préférentiellement inférieure ou égale à 1,6 cm/s, avantageusement inférieure ou égale à 1,5 cm/s.

9. Procédé selon l'une quelconque des revendications 1 à 8, **caractérisé en ce que** le premier et second échangeurs sont du type air / fluide frigorigène.

10. Procédé selon l'une quelconque des revendications 1 à 9, **caractérisé en ce que** la boucle frigorifique est couplée thermiquement avec un circuit de refroidissement du moteur et/ou du circuit électronique.

11. Procédé selon l'une quelconque des revendications 1 à 10, **caractérisé en ce que** le premier échangeur de chaleur est traversé à la fois par le fluide frigorigène, et par des gaz d'échappement issus du moteur thermique du véhicule automobile ou par la chaleur issue de la batterie ou du circuit électronique du véhicule automobile.

12. Procédé selon l'une quelconque des revendications 1 à 11, **caractérisé en ce que** la boucle peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile, et/ou avec de la chaleur issue du moteur électrique et/ou du circuit électronique et de la batterie du véhicule automobile électrique.

13. Procédé selon l'une quelconque des revendications 1 à 12, **caractérisé en ce que** la boucle frigorifique est installée dans les véhicules pour la récupération d'énergie du moteur thermique et/ou de la batterie électrique.

14. Dispositif comprenant la boucle frigorifique réversible selon l'une quelconque des revendications précédentes.

**Patentansprüche**

1. Verfahren zum Heizen und/oder Klimatisieren eines Fahrgastraums eines Kraftfahrzeugs mit Hilfe einer reversiblen Kühlschleife, in der ein Kältefluid zirkuliert, umfassend einen ersten Wärmetauscher, einen Druckminderer, einen zweiten Wärmetauscher, einen Verdichter und Mittel zur Umkehrung des Betriebs der reversiblen Kühlschleife, **dadurch gekennzeichnet, dass** das Kältefluid Folgendes umfasst:

   - 4 bis 6 Gew.-% Difluormethan;
   - 2,5 bis 3,5 Gew.-% Tetrafluorethan und
   - 91 bis 93,5 Gew.-% Tetrafluorpropen, bevorzugt 2, 3, 3, 3-Tetrafluorpropen.

2. Verfahren nach Anspruch 1, wobei das Kältefluid Folgendes umfasst:

   - 4,5 bis 5,5 Gew.-% Difluormethan;
   - 2,5 bis 3,5 Gew.-% Tetrafluorethan und
   - 91 bis 93 Gew.-% Tetrafluorpropen, insbesondere 2,3,3,3-Tetrafluorpropen, bevorzugt 91 bis 92 Gew.-% Tetrafluorpropen.

3. Verfahren nach Anspruch 1 oder 2, wobei das Kältefluid Folgendes umfasst:

   - 4,5 bis 5,5 Gew.-% Difluormethan;
   - 2,5 bis 3,5 Gew.-% Tetrafluorethan und
   - 91,5 bis 93 Gew.-% Tetrafluorpropen.

4. Verfahren nach Anspruch 1 oder 2, wobei das Kältefluid Folgendes umfasst:

   - 4,5 bis 5,5 Gew.-% Difluormethan;
   - 3 bis 3,5 Gew.-% Tetrafluorethan und
   - 91 bis 92 Gew.-% Tetrafluorpropen.

5. Verfahren nach einem der Ansprüche 1 bis 4, wobei das Kältefluid ausgewählt ist aus der Gruppe bestehend aus:

   - 5 Gew.-% Difluormethan, 3,3 Gew.-% Pentafluorethan und 91,7 Gew.-% Tetrafluorpropen, insbesondere 2,3,3,3-Tetrafluorpropen;
   - 5 Gew.-% Difluormethan, 3 Gew.-% Pentafluorethan und 92 Gew.-% Tetrafluorpropen, insbesondere 2,3,3,3-Tetrafluorpropen;
   - 5 Gew.-% Difluormethan, 3,1 Gew.-% Pentafluorethan und 91,9 Gew.-% Tetrafluorpropen, insbesondere 2,3,3,3-Tetrafluorpropen;
   - 5 Gew.-% Difluormethan, 3,2 Gew.-% Pentafluorethan und 91,8 Gew.-% Tetrafluorpropen, insbesondere 2,3,3,3-Tetrafluorpropen;
   - 6 Gew.-% Difluormethan, 3 Gew.-% Pentafluorethan und 91 Gew.-% Tetrafluorpropen, insbesondere 2,3,3,3-Tetrafluorpropen;
   - 6 Gew.-% Difluormethan, 2,5 Gew.-% Pentafluorethan und 91,5 Gew.-% Tetrafluorpropen, insbesondere 2,3,3,3-Tetrafluorpropen.

6. Verfahren nach einem der Ansprüche 1 bis 5, wobei das Kältefluid ein GWP von weniger als 150, bevorzugt kleiner oder gleich 140, insbesondere kleiner oder gleich 130, aufweist.

7. Verfahren nach einem der Ansprüche 1 bis 6, wobei das Kältefluid eine untere Entflammbarkeitsgrenze von mehr als 285 g/m$^3$, bevorzugt größer oder gleich 287 g/m$^3$, insbesondere größer oder gleich 290 g/m$^3$, aufweist.

8. Verfahren nach einem der Ansprüche 1 bis 7, wobei das Kältefluid eine Flammenfortpflanzungsgeschwindigkeit von weniger als 2 cm/s, bevorzugt kleiner oder gleich 1,7 cm/s, vorzugsweise kleiner oder gleich 1,6 cm/s, vorteilhafterweise kleiner oder gleich 1,5 cm/s, aufweist.

9. Verfahren nach einem der Ansprüche 1 bis 8, **dadurch gekennzeichnet, dass** der erste und der zweite Wärmetauscher vom Luft/Kältefluid-Typ sind.

10. Verfahren nach einem der Ansprüche 1 bis 9, **dadurch gekennzeichnet, dass** die Kühlschleife thermisch mit einem Kühlkreislauf des Motors und/oder der elektronischen Schaltung gekoppelt ist.

11. Verfahren nach einem der Ansprüche 1 bis 10, **dadurch gekennzeichnet, dass** der erste Wärmetauscher sowohl von dem Kältefluid als auch von Auspuffgasen, die vom Verbrennungsmotor des Kraftfahrzeugs stammen, oder von der Wärme, die aus der Batterie oder aus der elektronischen Schaltung des Kraftfahrzeugs stammt, durchströmt wird.

12. Verfahren nach einem der Ansprüche 1 bis 11, **dadurch gekennzeichnet, dass** die Schleife als Abzweigung mindestens einen Wärmetauscher umfassen kann, der mit einem Luftstrom, der zum Einlassen in den Verbrennungsmotor des Kraftfahrzeugs bestimmt ist, oder mit Auspuffgasen, die vom Fahrzeug-Verbrennungsmotor stammen und/oder mit der Wärme, die aus der Batterie oder aus der elektronischen Schaltung des Kraftfahrzeugs stammt, in Wärmeverbindung steht.

13. Verfahren nach einem der Ansprüche 1 bis 12, **dadurch gekennzeichnet, dass** die Kühlschleife in den Fahrzeugen zur Rückgewinnung von Energie des Verbrennungsmotors und/oder der elektrischen Batterie installiert ist.

14. Vorrichtung, umfassend die reversible Kühlschleife nach einem der vorhergehenden Ansprüche.

**Claims**

1. A process for heating and/or air conditioning a motor vehicle passenger compartment using a reversible refrigerating loop, in which a refrigerant circulates, comprising a first heat exchanger, an expansion valve, a second heat exchanger, a compressor and means for inversion of the operation of the reversible refrigerating loop, **characterized in that** the refrigerant comprises:

   - from 4% to 6% by weight of difluoromethane;
   - from 2.5% to 3.5% by weight of pentafluoroethane; and
   - from 91% to 93.5% by weight of tetrafluoropropene, preferably 2,3,3,3-tetrafluoropropene.

2. The process as claimed in claim 1, in which the refrigerant comprises:

   - from 4.5% to 5.5% by weight of difluoromethane;
   - from 2.5% to 3.5% by weight of pentafluoroethane; and
   - from 91% to 93% by weight of tetrafluoropropene, in particular 2,3,3,3-tetrafluoropropene, preferably from 91% to 92% by weight of tetrafluoropropene.

3. The process as claimed in claim 1 or 2, in which the refrigerant comprises:

   - from 4.5% to 5.5% by weight of difluoromethane;
   - from 2.5% to 3.5% by weight of pentafluoroethane; and
   - from 91.5% to 93% by weight of tetrafluoropropene.

4. The process as claimed in either of claims 1 and 2, in which the refrigerant comprises:

   - from 4.5% to 5.5% by weight of difluoromethane;
   - from 3% to 3.5% by weight of pentafluoroethane; and
   - from 91 % to 92% by weight of tetrafluoropropene.

5. The process as claimed in one of claims 1 to 4, in which the refrigerant is chosen from the group consisting of:

   - 5% by weight of difluoromethane, 3.3% by weight of pentafluoroethane and 91.7% by weight of tetrafluoropropene, in particular of 2,3,3,3-tetrafluoropropene;
   - 5% by weight of difluoromethane, 3% by weight of pentafluoroethane and 92% by weight of tetrafluoropropene, in particular of 2,3,3,3-tetrafluoropropene;
   - 5% by weight of difluoromethane, 3.1% by weight of pentafluoroethane and 91.9% by weight of tetrafluoropropene, in particular of 2,3,3,3-tetrafluoropropene;

- 5% by weight of difluoromethane, 3.2% by weight of pentafluoroethane and 91.8% by weight of tetrafluoropropene, in particular of 2,3,3,3-tetrafluoropropene;
- 6% by weight of difluoromethane, 3% by weight of pentafluoroethane and 91% by weight of tetrafluoropropene, in particular of 2,3,3,3-tetrafluoropropene; and
- 6% by weight of difluoromethane, 2.5% by weight of pentafluoroethane and 91.5% by weight of tetrafluoropropene, in particular of 2,3,3,3-tetrafluoropropene.

6. The process as claimed in one of claims 1 to 5, in which the refrigerant has a GWP of less than 150, preferably of less than or equal to 140, in particular of less than or equal to 130.

7. The process as claimed in one of claims 1 to 6, in which the refrigerant has a lower flammability limit of greater than 285 $g/m^3$, preferably of greater than or equal to 287 $g/m^3$, in particular of greater than or equal to 290 $g/m^3$.

8. The process as claimed in one of claims 1 to 7, in which the refrigerant has a flame propagation rate of less than 2 cm/s, preferably of less than or equal to 1.7 cm/s, preferentially of less than or equal to 1.6 cm/s, advantageously of less than or equal to 1.5 cm/s.

9. The process as claimed in any one of claims 1 to 8, **characterized in that** the first and second exchangers are of the air/refrigerant type.

10. The process as claimed in any one of claims 1 to 9, **characterized in that** the refrigerating loop is thermally coupled with a cooling circuit of the engine and/or of the electronic circuit.

11. The process as claimed in any one of claims 1 to 10, **characterized in that** the first heat exchanger is traversed both by the refrigerant and by exhaust gases resulting from the heat engine of the motor vehicle or by the heat resulting from the battery or from the electronic circuit of the motor vehicle.

12. The process as claimed in any one of claims 1 to 11, **characterized in that** the loop can comprise, as a bypass, at least one heat exchanger in thermal communication with a stream of air, intended to be admitted inside the heat engine of the motor vehicle, or with exhaust gases resulting from the motor vehicle heat engine, and/or with heat resulting from the electric motor and/or from the electronic circuit and from the battery of the electric motor vehicle.

13. The process as claimed in any one of claims 1 to 12, **characterized in that** the refrigerating loop is installed in the vehicles for the recovery of energy from the heat engine and/or from the electric battery.

14. A device comprising the reversible refrigerating loop as claimed in any one of the preceding claims.

FIGURE 1

FIGURE 2

FIGURE 3

FIGURE 4

FIGURE 5

FIGURE 6

FIGURE 7

**EP 3 601 469 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008107623 A
- WO 2010058126 A
- US 2013096218 A
- FR 2959998